# EUROPÄISCHE PATENTSCHRIFT

(11) **EP 3 162 668 B1**
(45) Veröffentlichungstag und Bekanntmachung des Hinweises auf die Patenterteilung: **14.03.2018**
(21) Anmeldenummer: 16196579.3
(22) Anmeldetag: 31.10.2016
(51) Int. Cl.: B62D 15/02, B66F 9/075, G01B 11/26

(54) **VORRICHTUNG UND VERFAHREN ZUR ERFASSUNG EINER IST-STELLUNG EINES ELEKTRISCH GELENKTEN RADES**
DEVICE AND METHOD FOR CAPTURING THE CURRENT POSITION OF AN ELECTRICALLY STEERED WHEEL
DISPOSITIF ET PROCÉDÉ DE DÉTECTION D'UNE POSITION RÉELLE D'UNE ROUE À COMMANDE ÉLECTRIQUE

(30) Priorität: 02.11.2015 DE 102015118749
(43) Veröffentlichungstag der Anmeldung: 03.05.2017
(73) Patentinhaber: Jungheinrich Aktiengesellschaft, 22047 Hamburg (DE)
(72) Erfinder: Düwel, Matthias, 22850 Norderstedt (DE); Glaeske, Jens, 22844 Norderstedt (DE)
(74) Vertreter: Hauck Patentanwaltspartnerschaft mbB

(56) Entgegenhaltungen:
- EP-A2- 1 308 371
- DE-A1- 4 243 778

## Beschreibung

Die vorliegende Erfindung betrifft eine Vorrichtung und ein Verfahren zur Erfassung der Ist-Stellung eines gelenkten Rades bei einer elektrischen Lenkung für ein Flurförderzeug. Eine elektrische Lenkung zeichnet sich dadurch aus, dass eine Sollwertvorgabe für den Lenkwinkel elektrisch zu einem Lenkantrieb übertragen wird.

Aus DE 101 53 915 A1 ist ein Verfahren und eine Vorrichtung zur Erfassung der Ist-Stellung eines zu lenkenden Rades an einem Flurförderzeug mit elektrischer Lenkung bekannt geworden. An einem Flurförderzeug wird ein zu lenkendes Rad über eine elektrische Lenkung gesteuert. Hierbei wird auf einen Sensor, der die Ist-Position des gelenkten Rades erfassen kann, verzichtet und ausgehend von einer Startposition inkrementell der Ist-Wert für die Stellung des gelenkten Rades berechnet. Bei dem bekannten Verfahren misst der Lenkantrieb seine Umdrehungen relativ zu einer Ausgangsposition. Das Flurförderzeug besitzt eine Erfassungseinrichtung, die ein Codierelement mit mehreren Abschnitten und einem zum Codierelement ausgerichteten Sensor aufweist. Die Abschnitte verlaufen jeweils radial zur Radschwenkachse und besitzen jeweils eine andere Bogenlänge als die übrigen Abschnitte. Der auf das Codierelement gerichtete Sensor ist in der Lage, einen Übergang in und aus einem Abschnitt zu erfassen, wobei während einer Lenkbewegung des Rades Codierelement und Sensor relativ zueinander bewegt werden. Zur Erfassung der Ist-Position des gelenkten Rades wird das Rad in eine erste Drehrichtung gedreht, bis der Sensor einen ersten Übergang erfasst. Ansprechend auf den erfassten Übergang wird das Rad in die entgegengesetzte Richtung gedreht, bis erneut ein Übergang von dem Sensor erfasst wird. Die Lenksteuerung bestimmt aus der zurückgelegten Winkelstrecke zwischen den beiden erfassten Übergängen den Abschnitt auf dem Codierelement, der durch die beiden

Übergänge begrenzt ist. Aufgrund der unterschiedlichen Bogenlänge der Abschnitte kann diese Zuordnung eindeutig von der Lenksteuerung vorgenommen werden. Aus den erkannten Abschnitten des Codierelements bestimmt die Lenksteuerung die Ist-Stellung des Rades. Ausgehend von der Ist-Stellung des Rades als Ausgangsposition kann durch eine inkrementelle Messung der Lenkbewegung die jeweils aktuelle Ist-Stellung bestimmt werden.

Als nachteilig am Stand der Technik hat sich herausgestellt, dass bei dem Überfahren der Abschnitte große Winkelbereiche des gelenkten Rades während der Referenzierfahrt zurückgelegt werden müssen. Dies ist zeitaufwendig und fördert den Abrieb des Reifens.

Der Erfindung liegt die Aufgabe zugrunde, eine Vorrichtung und ein Verfahren zur Erfassung der Ist-Stellung eines gelenkten Rades bereitzustellen, die mit einfachen Mitteln eine möglichst schnelle Verstellbewegung des gelenkten Rades erlaubt.

Erfindungsgemäß wird die Aufgabe durch eine Vorrichtung mit den Merkmalen aus Anspruch 1 sowie durch ein Verfahren mit den Merkmalen aus den Ansprüchen 10-12 gelöst. Vorteilhafte Ausgestaltungen bilden die Gegenstände der Unteransprüche.

Die erfindungsgemäße Vorrichtung ist vorgesehen und bestimmt zur Erfassung der Ist-Stellung eines gelenkten Rades bei einer elektrischen Lenkung für ein Flurförderzeug. Die Vorrichtung weist einen Lenkantrieb auf, der das gelenkte Rad um eine bevorzugt vertikale Achse stellt. Ferner besitzt die Vorrichtung eine Erfassungseinrichtung, die ein sich mit dem gelenkten Rad drehendes Codierelement mit einer Vielzahl von sich in ihrer Bogenlänge unterscheidenden Abschnitten und einen fahrzeugfesten Sensor aufweist. Entscheidend ist die relative Bewegung von Codierelement und Sensor, so dass auch das Codierelement fahrzeugfest und der Sensor mitdrehend angeordnet sein können. Das Codierelement besitzt zwei Typen von Abschnitten. Die Abschnitte vom ersten Typ sind über ihre Bogenlänge gegenüber allen anderen Abschnitten eindeutig identifizierbar. Dies bedeutet, dass die Bogenlänge des Abschnitts erlaubt festzulegen welcher Abschnitt vorliegt. Das gelenkte Rad und das Codierelement sind erfindungsgemäß derart relativ zueinander angeordnet, dass der oder die Abschnitte vom ersten Typ für eine Geradeausfahrt eine geringere Bogenlänge als die anderen Abschnitte vom ersten Typ besitzen. Der oder die Abschnitte für eine Geradeausfahrt sind vom ersten Typ. Die Erfindung beruht auf der Erkenntnis, dass beim Verfahren des gelenkten Rades, der sogenannten Referenzierfahrt, das Rad in der Regel nahe seiner Geradeausposition ausgerichtet ist. Indem der Abschnitt, der zur Erfassung der Ist-Position ausreicht, eine kleine Bogenlänge aufweist und nahe angrenzend an die Geradeausposition angeordnet ist, wird eine möglichst kurze Referenzierfahrt für das Fahrzeug sichergestellt.

Bevorzugt sind die Abschnitte vom ersten Typ mit kleinerer Bogenlänge bei einer Vorzugsdrehrichtung jeweils näher zu den Positionen für eine Geradeausfahrt angeordnet, als die Abschnitte mit größerer Bogenlänge, Hierdurch wird sichergestellt, dass in der Regel nur kleine Bogenlängen bei einer Drehung in Richtung der Vorzugsdrehrichtung auftreten.

In einer bevorzugten Weiterbildung der Erfindung detektiert der Sensor Übergänge zwischen Abschnitten des ersten und des zweiten Typs. Ein solcher Sensor kann beispielsweise optisch arbeiten oder als Nähesensor ausgebildet sein.

In einer bevorzugten Weiterbildung ermittelt die Erfassungseinheit den Ist-Wert des gelenkten Rades aus einem Übergang zu einem der Abschnitte vom ersten Typ sowie aus einer erfassten Bogenlänge des Abschnitts vom ersten Typ.

In einer bevorzugten Ausgestaltung ist das Codierelement scheibenförmig mit alternierenden Abschnitten vom ersten und zweiten Typ ausgebildet. Bevorzugt sind die Abschnitte auf einer Flachseite des scheibenförmigen Codierelements ausgebildet. Bei dieser Ausgestaltung des Codierelements ist der Sensor auf die Flachseite des Codierelements gerichtet, um die Übergänge zwischen den Abschnitten zu detektieren. Bevorzugt ist hierbei der Sensor fahrzeugfest und das Codierelement mitdrehend angeordnet.

In einer bevorzugten Weiterbildung der erfindungsgemäßen Vorrichtung ist die Differenz der Bogenlänge zwischen zwei benachbarten Abschnitten des ersten Typs möglichst groß gewählt. Die Anordnung der Abschnitte auf dem Codierelement erfolgt bevorzugt derart, dass die Bogenlänge der Abschnitte vom zweiten Typ für alle Abschnitte gleich groß sein kann.

Die der Erfindung zugrundeliegende Aufgabe wird ebenfalls durch ein Verfahren mit den Merkmalen aus Anspruch 10 gelöst.

Das erfindungsgemäße Verfahren ist vorgesehen und bestimmt zur Erfassung von einer Ist-Stellung eines gelenkten Rades bei einer elektrischen Lenkung für ein Flurförderzeug. Das Flurförderzeug besitzt einen das gelenkte Rad stellenden Lenkantrieb und ein mit einem Sensor zusammenwirkendes Codierelement, das eine Vielzahl von sich in ihrer Bogenlänge unterscheidenden Abschnitten aufweist. Bei dem Verfahren bewegt sich bei einer Lenkbewegung der Sensor relativ zu dem Codierelement, wobei die Abschnitte des Codierelements zwei, von dem Sensor detektierbare Typen aufweisen, die alternierend entlang dem Umfang des Codierelements angeordnet sind. Die Abschnitte vom ersten Typ besitzen eine den Abschnitt eindeutig identifizierende Bogenlänge. Bei dem erfindungsgemäßen Verfahren wird das Rad in eine erste Drehrichtung gedreht, bis der Sensor einen ersten Übergang zwischen zwei benachbarten Abschnitten des Codierelements detektiert. Nachfolgend wird unter Beibehaltung oder Umkehr der Drehrichtung das gelenkte Rad derart ausgelenkt, dass ein Abschnitt eines ersten Typs vollständig überstrichen wird. Bei dem erfindungsgemäßen Verfahren ist das Codierelement relativ zu dem gelenkten Rad derart angeordnet, dass ein Abschnitt vom ersten Typ für die Geradeausfahrt eine geringere Bogenlänge als die anderen Abschnitte des ersten Typs aufweisen. Bei dem Verfahren werden die überstrichenen Bogenlängen und die Position des Übergangs ausgewertet, um die Ist-Position des gelenkten Rades zu bestimmen. Bei dem erfindungsgemäßen Verfahren ist nur eine vergleichsweise kurze Referenzierfahrt erforderlich, da nur eine geringe Verstellbewegung bereits den Winkelbereich des zu detektierenden Abschnitts überstreichen kann.

In einer bevorzugten Ausgestaltung erfolgt die Drehbewegung ohne Umkehr der Drehrichtung. Dies bedeutet, dass mitunter zwei Abschnitte vollständig überstrichen werden müssen. Ist die Ausgangslage bei Erfassung des Ist-Winkels beispielsweise ein Abschnitt vom ersten Typ, so wird, wenn ohne Umkehr der Drehrichtung gearbeitet wird, zunächst der angrenzende Abschnitt vom zweiten Typ vollständig überstrichen, bis dann ein Abschnitt vom ersten Typ vollständig überstrichen werden kann.

In einer bevorzugten Ausgestaltung des erfindungsgemäßen Verfahrens wird bei einem Ausschalten der elektrischen Lenkung eine aktuelle Lenkstellung gespeichert. Bei einem erneuten Einschalten der elektrischen Lenkung wird ausgehend von der gespeicherten Lenkstellung ermittelt, welcher von den angrenzenden Abschnitten vom ersten Typ die kleinere Bogenlänge besitzt. Dementsprechend wird die Drehrichtung im Verfahren gewählt, so dass stets der kleinere von den beiden Abschnitten vom ersten Typ durchfahren wird. Dieses Verfahren arbeitet zuverlässig, wenn zwischen dem Ausschalten der elektrischen Lenkung die Stellung des gelenkten Rades nicht zu stark gegenüber der gespeicherten Stellung verändert wird.

Ein bevorzugtes Ausführungsbeispiel der Erfindung wird nachfolgend anhand von Figuren erläutert. Es zeigen:
- Fig. 1: ein beispielhaftes Codierelement nach den Vorgaben der Erfindung, und
- Fig. 2: in einer schematischen Ansicht ein Beispiel für eine elektronische Lenkung, bei der das Codierelement aus Fig. 1 eingesetzt werden kann.

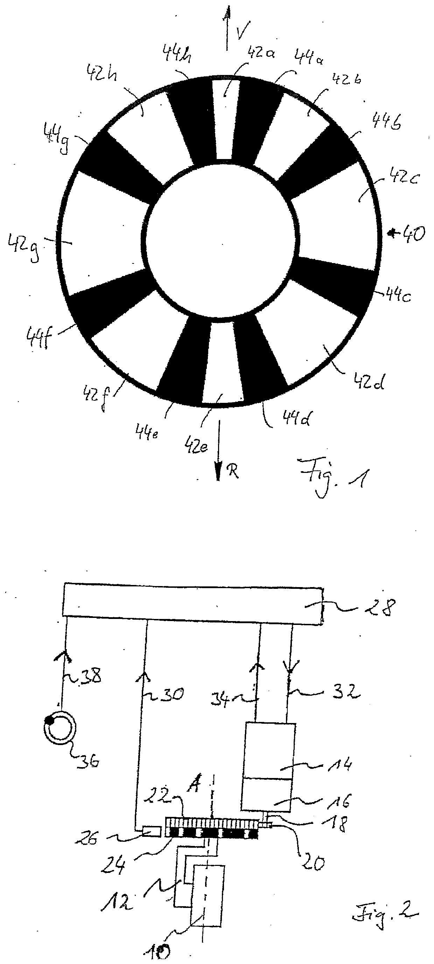

Fig. 2 zeigt eine schematische Ansicht einer elektrischen Lenkung für ein Flurförderzeug, wie sie beispielsweise auch der elektrischen Lenkung in DE 101 53 915 zugrunde liegt. Das gelenkte Rad 10 ist an einem Drehschemel 12 gehalten. Der Drehschemel 12 ist um die Drehachse A drehbar an dem Fahrzeug gelagert. Angetrieben wird der Drehschemel über einen Elektromotor 14, dessen Abgangswelle in einem Getriebe 16 mündet. Das Getriebe 16 übersetzt die Drehbewegung des Elektromotors 14 und besitzt eine Abgangswelle 18, die mit einem Ritzel 20 in einem Zahnrad 22 des Drehschemels kämmt. Ein Codierelement 24 dreht mit dem Drehschemel 12 zusammen. Die Drehbewegung des Codierelements 24 wird von einem Sensor 26 erfasst. In dem dargestellten Beispiel aus Fig. 2 ist der Sensor 26 radial zu dem Codierelement 24 angeordnet. Selbstverständlich kann der Sensor 26 auch auf einer Flachseite oberhalb oder unterhalb des Codierelements angeordnet sein.

Die in Fig. 2 dargestellte elektrische Lenkung besitzt eine Lenksteuerung 28, die über eine Leitung 30 die Signale des Sensors einliest und auswertet. Ebenso liegt ein Sollwert des Lenkrades 36 über eine Leitung 38 an der Lenksteuerung 28 an. Über die Leitung 32 gibt die Lenksteuerung Steuerbefehle an den Elektromotor 14 oder der Elektromotor wird direkt durch die Lenksteuerung angesteuert. Der Elektromotor 14 besitzt ein Sensorlager. Das Sensorlager kann beispielsweise zwei digitale, um 90° versetzte Signale liefern. Durch eine Vierfachauswertung können aus dem Lager mit 64 Impulsen pro Kanal und pro Umdrehung insgesamt 256 Impulse gewonnen werden, was zu einer Auflösung zur Drehbewegung des Elektromotors von 1,41° führt. Aufgrund einer Getriebeübersetzung von beispielsweise 1 : 200 kann eine relative Auflösung von 0,007° erreicht werden. Das Sensorlager in dem Elektromotor ist beispielsweise bei einer feldorientierten Regelung einer Asynchronmaschine bereits vorgesehen und muss nicht zusätzlich eingebaut werden. Alternativ zu einem Sensorlager kann auch ein Sensor mit Hall-Elementen vorgesehen sein, der außerhalb des Lagers angeordnet sein kann.

Fig. 1 zeigt ein Codierelement 40, das weiße Abschnitte 42a - 42h besitzt, die gemeinsam dem ersten Typ von Abschnitten angehören. Die Abschnitte 44a - 44h gehören zum zweiten Typ der Abschnitte. Die Abschnitte können beispielsweise als aus der Flachseite des Codierelements vorstehende und zurückspringende Abschnittsberge und -täler ausgebildet sein. Je nach Ausgestaltung des Sensors können die Abschnitte auch farbliche Markierungen auf dem Codierelement darstellen.

Das Codierelement besitzt mit den Abschnitten 42a und 42e zwei Abschnitte vom ersten Typ, die die Geradeausfahrt anzeigen. Hierbei zeigt der Abschnitt 42a die Geradeausfahrt in Vorwärtsrichtung (V) und 42e die Geradeausfahrt in Rückwärtsrichtung (R) an. Angrenzend an die Abschnitte 42a und 42e kommen Abschnitte vom zweiten Typ 44a und 44h bzw. 44d und 44e. Diese besitzen, wie die übrigen Abschnitte vom zweiten Typ, sämtlich die gleiche Bogenlänge. Abschnitt 42a ist der Abschnitt, der die geringste Bogenlänge von allen Abschnitten des ersten Typs besitzt. Wird also eine Referenzierfahrt für das Fahrzeug ausgeführt, so wird bei einer Ausgangslage in Abschnitt 42a oder 44a der Übergang zu dem Abschnitt vom ersten Typ, also Abschnitt 42b, detektiert und die Drehbewegung fortgesetzt, bis der Übergang zu dem Abschnitt des zweiten Typs 44b detektiert ist. Aus der Lage der Übergänge und der Länge des Abschnitts 42b kann dann der Ist-Wert des gelenkten Rades bestimmt werden. Die dabei zurückgelegte Winkelstrecke ist nur unwesentlich größer als das Winkelmaß der Abschnitte 44a + 42b. Bei der Geradeausfahrt in Rückwärtsrichtung übernimmt der Abschnitt 42f die Funktion des Abschnitts 42b.

Die Bogenlänge der einzelnen Abschnitte in Grad aus Fig. 1 findet sich in der nachfolgenden Tabelle:

| Abschnitt | Größe [Grad] |
|---|---|
| 42a | 10,0 |
| 44a | 17,5 |
| 42b | 20,0 |
| 44b | 17,5 |
| 42c | 40,0 |
| 44c | 17,5 |
| 42d | 35,0 |
| 44d | 17,5 |
| 42e | 15,0 |
| 44e | 17,5 |
| 42f | 30,0 |
| 44f | 17,5 |
| 42g | 45,0 |
| 44g | 17,5 |
| 42h | 25,0 |
| 44h | 17,5 |

In dem dargestellten Ausführungsbeispiel aus Fig. 1 besitzt das Codierelement einen Referenzabschnitt 42b, der den kleinsten Winkelbereich besitzt. Die Abschnitte 42a und 42e kennzeichnen die Geradeausfahrt und werden für die Referenzierfahrt berücksichtigt, wenn die Ausgangsstellung in Abschnitt 42h oder 44h liegt. Wenn die elektrische Lenkung mit anderen Mitteln ausgestattet ist, um eine Fahrt in Vorwärtsrichtung (V) und Rückwärtsrichtung (R) zu unterscheiden, kann auch der Abschnitt 42e mit einem ebenfalls kleineren Winkelbereich, wie beispielsweise der Abschnitt 42a ausgestattet sein.

Grundsätzlich ist es auch möglich, die Bereiche 42a oder 42e als Referenzbereiche anzusehen. In diesem Fall muss jedoch die Drehrichtung des gelenkten Rades beim Anfahren der Abschnittsgrenzen angefahren werden.

Bei dem vorstehend diskutierten Ausführungsbeispiel aus Fig. 1 ist die bevorzugte Drehrichtung im Uhrzeigersinn. In einer möglichen Weiterbildung der Erfindung ist es auch möglich, anhand einer abgespeicherten Lenkstellung die Drehrichtung für die Referenzierfahrt festzulegen. Hierbei wird ausgehend von der gespeicherten Lenkstellung überprüft, ob eine Drehung in Uhrzeigersinn oder gegen den Uhrzeigersinn ein Abschnitt vom ersten Typ mit einer kürzeren Winkellänge überstreicht. Ist beispielsweise als Lenkstellung eine Position in Abschnitt 42f abgespeichert, so wird für eine Referenzierfahrt festgestellt, dass bei einer Drehung gegen den Uhrzeigersinn dem Abschnitt 42e eine kleinere Bodenlänge überstrichen wird als mit dem Abschnitt 42g. In diesem Fall erfolgt die Referenzierfahrt in einer Drehrichtung gegen den Uhrzeigersinn.

### Bezugszeichenliste

- 10: Rad
- 12: Drehschemel
- 14: Elektromotor
- 16: Getriebe
- 18: Abgangswelle
- 20: Ritzel
- 22: Zahnrad
- 24: Codierelement
- 26: Sensor
- 28: Lenksteuerung
- 30: Leitung
- 32: Leitung
- 34: Leitung
- 36: Lenkrad
- 38: Leitung
- 40: Codierelement
- 42a - 42h: Abschnitte
- 44a - 44h: Abschnitte

## Patentansprüche

1. Vorrichtung zur Erfassung der Ist-Stellung eines gelenkten Rades bei einer elektrischen Lenkung für ein Flurförderzeug mit
- einem Lenkantrieb, der das gelenkte Rad stellt, und
- einer Erfassungseinrichtung, die ein Codierelement mit einer Vielzahl von in ihrer Bogenlänge unterschiedlichen Abschnitten und einem relativ dazu bewegten Sensor aufweist, **dadurch gekennzeichnet**,
- dass das Codierelement zwei Typen von Abschnitten aufweist, von denen Abschnitte vom ersten Typ eine den Abschnitt eindeutig identifizierende Bogenlänge besitzen und dass
- das gelenkte Rad und das Codierelement derart relativ zueinander angeordnet sind, dass der oder die Abschnitte vom ersten Typ für eine Geradeausfahrt eine geringere Bogenlänge als die anderen Abschnitte vom ersten Typ aufweisen.

2. Vorrichtung nach Anspruch 1, **dadurch gekennzeichnet, dass** die Abschnitte vom ersten Typ mit kleinerer Bogenlänge bei einer Vorzugsdrehrichtung jeweils näher zu den Positionen für eine Geradeausfahrt angeordnet sind, als die Abschnitte mit größerer Bogenlänge.

3. Vorrichtung nach einem der Ansprüche 1 oder 2, **dadurch gekennzeichnet, dass** der Sensor Übergänge zwischen Abschnitten vom ersten und zweiten Typ detektieren kann.

4. Vorrichtung nach einem der Ansprüche 1 bis 3, **dadurch gekennzeichnet, dass** die Erfassungseinheit den Ist-Wert des gelenkten Rades aus einem Übergang zu einem der Abschnitte vom ersten Typ und der erfassten Bogenlänge des Abschnitts bestimmt.

5. Vorrichtung nach einem der Ansprüche 1 bis 4, **dadurch gekennzeichnet, dass** das Codierelement scheibenförmig mit alternierenden Abschnitten vom ersten und zweiten Typ ausgebildet ist.

6. Vorrichtung nach Anspruch 5, **dadurch gekennzeichnet, dass** die Abschnitte vom ersten und zweiten Typ aus Messbergen und Messtälern bestehen.

7. Vorrichtung nach Anspruch 6, **dadurch gekennzeichnet, dass** die Abschnitte auf einer Flachseite des scheibenförmigen Codierelements ausgebildet sind.

8. Vorrichtung nach einem der Ansprüche 1 bis 7, **dadurch gekennzeichnet, dass** die Differenz der Bogenlänge zwischen zwei benachbarten Abschnitten des ersten Typs möglichst groß ist.

9. Vorrichtung nach einem der Ansprüche 1 bis 8, **dadurch gekennzeichnet, dass** alle Abschnitte vom zweiten Typ eine konstante Bogenlänge aufweisen.

10. Verfahren zur Erfassung von einer Ist-Stellung eines gelenkten Rades bei einer elektrischen Lenkung für ein Flurförderzeug mit einem das gelenkte Rad stellenden Lenkantrieb und einem mit einem Sensor zusammenwirkenden Codierelement, das eine Vielzahl von sich in ihrer Bogenlänge unterscheidenden Abschnitten aufweist, wobei der Sensor und das Codierelement relativ zueinander drehbar sind und die Abschnitte zwei von dem Sensor detektierbare Typen aufweisen, die alternierend entlang dem Umfang angeordnet sind und die Abschnitte vom ersten Typ eine den Abschnitt eindeutig identifizierende Bogenlänge besitzen, das folgende Verfahrensschritte aufweist:
- das Rad wird in eine erste Drehrichtung gedreht, bis der Sensor einen ersten Übergang zwischen zwei benachbarten Abschnitten des Codierelements detektiert,
- nachfolgend wird unter Beibehaltung oder Umkehr der Drehrichtung das gelenkte Rad derart ausgelenkt, dass ein Abschnitt des ersten Typs vollständig überstrichen wird,
- wobei das Codierelement relativ zu dem gelenkten Rad derart angeordnet ist, dass der oder die Abschnitte vom ersten Typ für die Geradeausfahrt eine geringere Bogenlänge als die anderen Abschnitte vom ersten Typ aufweisen,
- und die Bogenlänge des überstrichenen Abschnitts und die Position des Übergangs ausgewertet werden, um die Ist-Position des gelenkten Rades zu bestimmen.

11. Verfahren nach Anspruch 10, **dadurch gekennzeichnet, dass** die Drehbewegung ohne Umkehr der Drehrichtung erfolgt.

12. Verfahren nach Anspruch 10 oder 11, **dadurch gekennzeichnet, dass** bei einem Ausschalten der elektrischen Lenkung eine aktuelle Lenkstellung gespeichert und bei einem erneuten Einschalten ausgehend von der gespeicherten Lenkstellung ermittelt wird, welcher von den angrenzenden Abschnitten vom ersten Typ die kleiner Bogenlänge besitzt, wobei die Drehrichtung derart gewählt wird, dass zuerst der ermittelte Abschnitt überfahren werden kann.

## Claims

1. A device for detecting the actual position of a steered wheel in an electric steering for an industrial truck, with
• a steering drive, which adjusts the steered wheel, and
• a detecting device, which comprises an encoding element having a plurality of sections differing in their arc lengths, and a sensor which is movable in relation to it, **characterised in that**
• the encoding element comprises two types of sections, from which sections of the first type have an arc length unambiguously identifying the section, and that
• the steered wheel and the encoding element are arranged with respect to each other such that the section or the sections of the first type have a smaller arc length for driving straight ahead than the other sections of the first type.

2. The device according to claim 1, **characterised in that** in a preferred direction of rotation, the sections of the first type with a smaller arc length are always arranged nearer to the positions for straight ahead driving than the sections with a greater arc length.

3. A device according to one of the claims 1 or 2, **characterised in that** the sensor can detect transitions between sections of the first and the second type.

4. A device according to one of the claims 1 to 3, **characterised in that** the detecting unit determines the actual value of the steered wheel from a transition to one of the sections of the first type and the detected arc length of the section.

5. A device according to one of the claims 1 to 4, **characterised in that** the encoding element is in the shape of a disc with alternating sections of the first and the second type.

6. The device according to claim 5, **characterised in that** the sections of the first and the second type consist of measurement hills and measurement valleys.

7. The device according to claim 6, **characterised in that** the sections are realised on a flat side of the disc-shaped encoding element.

8. A device according to one of the claims 1 to 7, **characterised in that** the difference of the arc length between two neighbouring sections of the first type is as great as possible.

9. A device according to one of the claims 1 to 8, **characterised in that** all the sections of the second type have one constant arc length.

10. A method for detecting an actual position of a steered wheel in an electric steering for an industrial truck with a steering drive adjusting the steered wheel and with an encoding element co-operating with a sensor, the encoding element having a plurality of sections differing in their arc lengths, the sensor and the encoding element being rotatable with respect to each other and the sections having two types detectable by the sensor, which are alternatingly arranged along the perimeter, and the sections of the first type having an arc length unambiguously identifying the section, the method has the following procedural steps:
• the wheel is turned into a first direction of rotation until the sensor detects a first transition between two neighbouring sections of the encoding element,
• thereafter, maintaining or reversing the direction of rotation, the steered wheel is deflected such that a section of the first type is completely swept,
• wherein the encoding element is arranged in relation to the steered wheel such that the section or the sections of the first type have a smaller arc length for straight-ahead driving than the other sections of the first type,
• and the arc length of the swept section and the position of the transition are evaluated in order to determine the actual position of the steered wheel.

11. The method according to claim 10, **characterised in that** the rotational movement takes place without reversing the rotational sense.

12. A method according to claim 10 or 11, **characterised in that** upon switching off the electric steering, an actual steering position is memorised and upon switching on anew, it is determined on the basis of the memorised steering position which one of the neighbouring sections of the first type has the smaller arc length, wherein the rotational sense is selected such that the determined section can be advanced at first.

## Revendications

1. Dispositif de détection d'une position réelle d'une roue directrice dans une commande électrique pour un chariot de manutention, avec
• un entraînement directionnel, qui règle la roue directrice, et
• un moyen de détection, qui comporte un élément de codage avec une pluralité de sections de différentes longueurs d'arc, et un capteur mobile par relation à cela, **caractérisé en ce que**
• l'élément de codage comporte deux types de sections, dont les types de la première section ont une longueur d'arc qui identifie la section de manière univoque, et que
• la roue directrice et l'élément de codage sont disposés l'un par rapport de l'autre tellement que la section ou les sections du premier type ont une longueur d'arc plus petite pour l'avance en ligne droite que les autres sections du premier type.

2. Dispositif selon la revendication 1, **caractérisé en ce que** dans un sens de rotation préféré, les sections du premier type avec une longueur d'arc plus petite sont chaque fois arrangées plus proches aux positions pour l'avance en ligne droite que les sections avec une longueur d'arc plus grande.

3. Dispositif selon une des revendications 1 ou 2, **caractérisé en ce que** le capteur peut détecter des transitions entre les sections du premier type et du deuxième type.

4. Dispositif selon une des revendications 1 à 3, **caractérisé en ce que** l'unité de détection détermine la valeur réelle de la roue directrice à partir d'une transition vers une section du premier type et la longueur d'arc détectée de la section.

5. Dispositif selon une des revendications 1 à 4, **caractérisé en ce que** l'élément de codage est en forme d'un disque avec des sections du premier type et du deuxième type alternantes.

6. Dispositif selon la revendication 5, **caractérisé en ce que** les sections du premier et du deuxième type consistent de montages et vallées de mesurement.

7. Dispositif selon la revendication 6, **caractérisé en ce que** les sections sont réalisées sur un côté plat de l'élément de codage en forme de disque.

8. Dispositif selon une des revendications 1 to 7, **caractérisé en ce que** la différence des longueurs d'arc entre deux sections du premier type adjacentes est aussi grande que possible.

9. Dispositif selon une des revendications 1 to 8, **caractérisé en ce que** toutes les sections du deuxième type ont une longueur d'arc constante.

10. Procédé de détection d'une position réelle d'une roue directrice dans une commande électrique pour un chariot de manutention, avec un entraînement directionnel réglant la roue directrice et avec un élément de codage co-opérant avec un capteur, l'élément de codage ayant une pluralité de sections différentes dans leurs longueurs d'arc, le capteur et l'élément de codage étant tournables l'un par rapport de l'autre et les sections ayant deux types détectables par le capteur, qui sont arrangés le long du périmètre de façon alternante, et les sections du premier type ayant une longueur d'arc qui identifie la section de manière univoque, le procédé a les étapes suivantes:
• la roue est tournée en un premier sens de rotation jusqu'à ce que le capteur détecte une première transition entre deux sections adjacentes de l'élément de codage,
• après cela, en maintenant ou en reversant le sens de rotation, la roue directrice est défléchie tellement qu'une section du premier type est entièrement balayée,
• l'élément de codage étant arrangé par rapport à la roue directrice tellement que la section ou les sections du premier type ont une longueur d'arc plus petite pour la marche en ligne droite que les autres sections du premier type,
• et la longueur d'arc de la section balayée et la position de la transition sont évaluées afin de déterminer la position réelle de la roue directrice.

11. Procédé selon la revendication 10, **caractérisé en ce que** le mouvement de rotation prend place sans renversement du sens de rotation.

12. Procédé selon la revendication 10 ou 11, **caractérisé en ce que** lorsque la commande électrique est déclenchée, la position de braquage actuelle est mémorisée et chez enclenchement de nouveau, il est déterminé en partant de la position de braquage mémorisée quelle des sections adjacentes du premier type a la longueur d'arc plus petite, le sens de rotation étant sélectionné tellement que la section déterminée peut être balayée en priorité.
